Europäisches Patentamt

European Patent Office

Office européen des brevets

(19)

(11) Numéro de publication : **0 085 591**
**B1**

# (12) FASCICULE DE BREVET EUROPÉEN

(45) Date de publication du fascicule du brevet :
30.10.85

(51) Int. Cl.⁴ : **B 64 G   1/66**

(21) Numéro de dépôt : 83400084.6

(22) Date de dépôt : 13.01.83

(54) **Dispositif de verrouillage multiple, insensible aux variations thermiques, applicable en particulier aux véhicules spatiaux.**

(30) Priorité : 22.01.82 FR 8200962

(43) Date de publication de la demande :
10.08.83 Bulletin 83/32

(45) Mention de la délivrance du brevet :
30.10.85 Bulletin 85/44

(84) Etats contractants désignés :
AT BE CH DE GB IT LI NL SE

(56) Documents cités :
Néant

(73) Titulaire : SOCIETE NATIONALE INDUSTRIELLE
AEROSPATIALE
37 boulevard de Montmorency
F-75016 Paris Cedex 16 (FR)

(72) Inventeur : Rinn, Christian
Résidence Altamira Allée des Vergnes
F-06210 Mandelieu (FR)
Inventeur : Vezain, Gérard
Domaine de Maire-Vieil Villa 137
F-06210 Mandelieu (FR)

(74) Mandataire : Rinuy, Guy et al
Cabinet Rinuy et Santarelli 14, Avenue de la Grande
Armée
F-75017 Paris (FR)

## Description

On sait que les engins spatiaux utilisent des appendices tels que générateurs solaires, réflecteurs d'antennes, mât, etc. qu'il convient de stocker sur le véhicule pendant la phase de lancement.

Pendant le lancement les appendices en question sont maintenus sur le satellite par un dispositif de gerbage pouvant comporter un ou plusieurs points de fixation temporaire ou points de gerbage, comme il est décrit dans l'article de M.G. Barkats « Rigid Fold-out solar array », Proc. European Symp. ou Photovoltaic Generators in Space (ESTEC. Noordwijk 11-13 Sept. 1978)-ESA SP-140 (Nov. 1978), pages 169-180.

Les dimensions importantes de tels appendices exigent leur repliement pour pouvoir être stockés dans le volume alloué par les lanceurs.

Cette configuration de lancement ou gerbée répond à des exigences multiples parmi lesquelles on peut citer :

le volume du lanceur limité ;

les dimensions géométriques déterminées en fonction de l'interface avec le satellite ;

le fonctionnement devant permettre la libération de l'appendice pour son déploiement ;

la tenue mécanique aux accélérations dues au lanceur ;

la rigidité qui a pour but d'effectuer un découplage de fréquence entre le lanceur, le satellite et les appendices, ceci dans le but de limiter les charges et donc, de permettre la réalisation des structures avec la masse minimum ;

l'obligation impérative de multiplier les points de gerbage pour tenir compte des dimensions des éléments et des fréquences exigées. Un tel dispositif de verrouillage multiple ne prend pas en compte les variations thermiques.

La présente invention concerne un dispositif permettant d'assurer avantageusement, dans le cadre rappelé ci-dessus, un verrouillage temporaire qui tout à la fois : limite les efforts de maintien nécessaires dans le système de libération, autorise la multiplication des points de gerbage, verrouillés et libérés par un seul câble de gerbage, et permet de s'affranchir des problèmes de dilatation thermique différentielle entre les câbles de gerbage et la structure du satellite sur laquelle ils sont fixés.

Le dispositif de verrouillage multiple, insensible aux variations thermiques selon l'invention se caractérise, pour chaque point de gerbage, par la combinaison des moyens suivants :

une gâchette articulée sur le pied du point de gerbage, cette gâchette assurant l'immobilisation temporaire de l'élément à verrouiller du point de gerbage ;

un palonnier articulé d'une part, sur la gâchette et lié, d'autre part, au câble de gerbage ; et une biellette élastique articulée, d'une part, sur le pied du point de gerbage et, d'autre part, sur le palonnier de façon telle que ladite biellette élastique exerce sur le plafonnier une force contraire au moment de maintien qu'exerce sur lui le câble de gerbage ;

grâce à quoi l'immobilisation temporaire de l'élément à verrouiller du point de gerbage est assurée par le câble de gerbage qui, par l'intermédiaire du palonnier et de la biellette élastique, maintient la gâchette en position verrouillée, aussi longtemps que le dispositif de sectionnement du câble de gerbage n'est pas mis en œuvre.

D'autres avantages et particularités de la présente invention ressortiront de la description qui en est donnée ci-après en référence aux dessins annexés représentant, schématiquement et simplement à titre d'exemple, une forme de réalisation possible de ladite invention.

Sur ces dessins :

la figure 1 est une vue en perspective d'un générateur solaire avec un point de gerbage correspondant à l'art antérieur ;

la figure 2 est un schéma explicatif du montage d'un dispositif de gerbage pour un générateur solaire maintenu par quatre points de gerbage, correspondant à l'art antérieur ;

la figure 3 est une vue en coupe verticale du point de gerbage de générateur solaire du type de la figure 1, immobilisé en configuration de lancement par un dispositif de verrouillage conforme à l'invention ;

la figure 4 est une vue schématique en plan du mécanisme de verrouillage proprement dit de la figure 3 ;

les figures 5, 6 et 7 sont des vues schématiques, à petite échelle, du même mécanisme de verrouillage représenté respectivement : en position verrouillée nominale ; en position verrouillée avec compensation en cas de raccourcissement du câble de gerbage ; et en position verrouillée avec compensation en cas d'allongement du câble ;

la figure 8 est un schéma explicatif du fonctionnement du mécanisme de verrouillage, après le sectionnement du câble de gerbage, amenant la libération de l'élément verrouillé ; et

la figure 9 est une vue en coupe verticale du point de gerbage de générateur solaire de la figure 3, tel qu'il se présente lorsque, après libération du dispositif de verrouillage, le déploiement de l'appendice est autorisé.

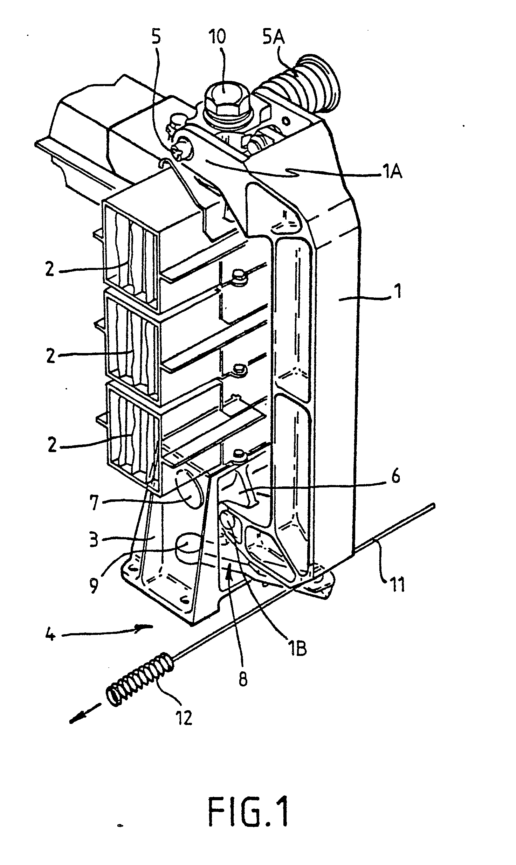

Le point de gerbage de générateur solaire représenté à titre d'exemple sur la figure 1 se caractérise par les éléments constitutifs suivants :

un étrier de gerbage 1 qui assure l'effort de maintien des volets 2, sur le pied de gerbage 3, lui-même fixé rigidement à la structure 4 du satellite, étant à noter que l'extrémité supérieure $1_A$ de l'étrier 1 s'articule en 5, sur le volet externe et est soumise à l'action d'un ressort de rappel $5_A$ ;

une biellette 6 articulée en 7 sur le pied 3 et sur laquelle vient s'accrocher l'extrémité inférieure $1_B$ de l'étrier 1 ;

une gâchette, désignée par la référence générale 8, articulée également en 9 sur le pied 3, qui empêche, comme on le verra en détail plus loin, la rotation de la biellette 6 et la libération de l'étrier 1. Cette biellette 6 est maintenue en position d'auto libération, c'est-à-dire que l'effort de tension de l'étrier 1, agissant comme un ressort grâce à une vis de mise en tension 10, provoque la rotation de la biellette 6, en cas d'effacement de la gâchette 8 ;

un câble de gerbage 11 qui maintient la gâchette 8 en position verrouillée de lancement, contre l'action d'un ressort de rappel 12.

La libération du générateur solaire pour son déploiement est assurée par le sectionnement du câble de gerbage 11, qui provoque :

l'effacement de la gâchette 8 sous l'action de son ressort de rappel ;

la rotation de la biellette 6 ;

la rotation de l'étrier 1 sous l'action de son ressort de rappel $5_A$.

Il apparaît immédiatement que le dispositif de gerbage proprement dit d'un appendice de véhicule spatial peut être constitué d'un certain nombre de points de gerbage tels que celui décrit ci-dessus.

D'autre part, les exigences de fiabilité imposent d'effectuer la libération de tous les points de gerbage avec une seule cisaille pyrotechnique qui, par l'intermédiaire d'un câble de gerbage commun ou navette, assure le déverrouillage simultané de tous les points de gerbage.

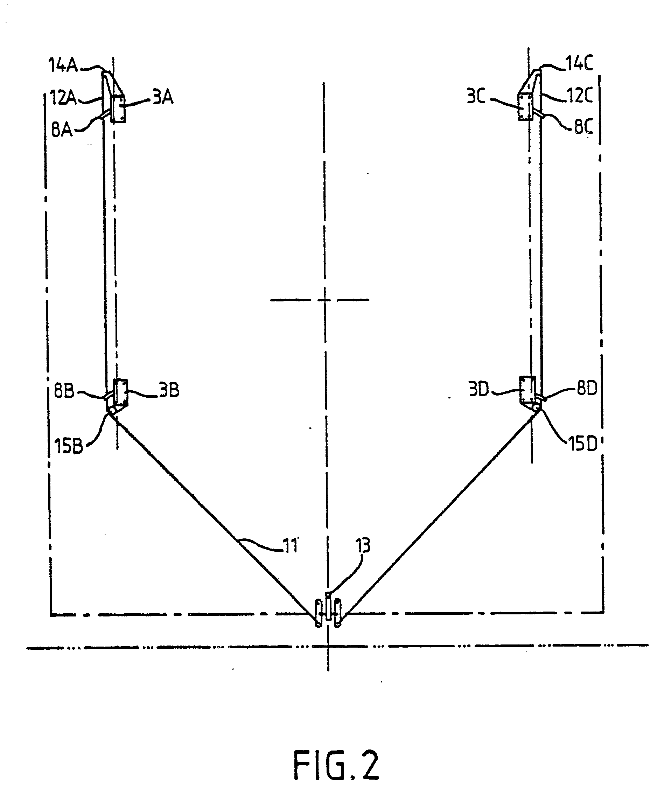

La figure 2 montre à titre d'exemple le schéma de principe d'un dispositif de gerbage pour un générateur solaire maintenu par quatre points de gerbage $3_A$, $3_B$, $3_C$ et $3_D$ dont les gâchettes respectives $8_A$, $8_B$, $8_C$ et $8_D$ sont maintenues en position de verrouillage par un câble de gerbage commun 11. Sur ce câble est inséré en un endroit approprié une cisaille pyrotechnique 13 d'un type quelconque connu, tandis que deux ressorts de rappel $12_A$ et $12_C$ sont fixés, respectivement entre les deux extrémités libres du câble de gerbage 11 et deux points fixes $14_A$ et $14_B$ solidaires des points de gerbage $3_A$ et $3_B$ en l'occurrence. Des poulies de renvoi $15_B$, $15_D$ assurent une parfaite orientation du câble 11 pour maintenir les gâchettes $8_A$, $8_B$, $8_C$ et $8_D$ en position de verrouillage.

Il est bien entendu que pour chacun des appendices d'un véhicule spatial autre que les générateurs solaires, ainsi d'ailleurs que pour chacun desdits générateurs, sera aménagé un dispositif de verrouillage.

Il est par ailleurs apparent que pour chacun des dispositifs de verrouillage la multiplication du nombre des points de gerbage, pouvant atteindre par exemple 6, 8, 10 et même plus, ainsi que l'utilisation d'un câble de gerbage unique reliant toutes les gâchettes entre elles présentent les deux inconvénients suivants :

l'addition des efforts de maintien des gâchettes dans le câble de gerbage unique, qui entraîne une limitation du nombre de points de gerbage en fonction de la résistance du câble ;

la dilatation différentielle du corps du satellite et du câble provenant des variations de température, tant du corps de satellite que du câble de gerbage.

Ces dilatations différentielles peuvent provoquer deux effets :

a) Cas d'augmentation de température.

Il se produit une diminution de la tension du câble entraînant une chute de l'effort de serrage des points de gerbage ;

b) Cas de diminution de température.

Il se produit une augmentation de la tension du câble pouvant entraîner une rupture intempestive de ce dernier.

Ce problème de dilatation différentielle est très aggravé dans ses conséquences sur les satellites géostationnaires dont les séquences de lancement comportent une phase de transfert durant laquelle le satellite est stabilisé selon trois de ses axes.

Comme cela est décrit dans la demande de brevet européen 82400781.9 EP au nom de la Demanderesse, le véhicule spatial, pour répondre à l'exigence de mission, présente toujours la même face au soleil.

Il s'avère que dans ces conditions de vol, la gamme des températures du câble de gerbage s'étend de + 260° à − 170 °C par rapport à la température ambiante, et que la solution au problème de dilatation différentielle présente une très grande importance.

C'est ainsi que dans les conditions de températures précitées, un câble de gerbage de coefficient de dilatation $17 \times 10^{-6}$ mm/mm/°C et d'une longueur de 2 000 mm, va dans un cas s'allonger de 9 mm, et dans l'autre cas se raccourcir de 6 mm.

La présente invention concerne un dispositif de verrouillage multiple, insensible aux variations thermiques permettant de résoudre d'une façon particulièrement simple et efficace les problèmes précités en ce qu'il présente la double possibilité :

de s'affranchir des dilatations différentielles en agissant comme compensateur de longueur et de tension ;

d'autoriser la multiplication des points de gerbage grâce à une diminution de l'effort de maintien nécessaire pour immobiliser les gâchettes.

En d'autres termes, et, comme cela sera décrit en détail plus loin, le dispositif de verrouillage suivant l'invention permet d'assurer, en chaque point de gerbage de l'appendice :

le maintien d'un élément verrou ou gâchette dans une position qui assure le gerbage de l'appendice, en l'occurrence le maintien de la gâchette 8 en position d'immobilisation de la biellette 6 sur laquelle vient prendre appui et s'accrocher l'extrémité $1_B$ de l'étrier 1 ;

la compensation des effets de la dilatation différentielle du câble 11 en garantissant la fonction verrouillage de la gâchette 8 dans la gamme de température exigée ;

la démultiplication de l'effort nécessaire pour maintenir la gâchette 8 en position verrouillée ;

la libération de l'élément à verrouiller 6, par sectionnement du câble de gerbage 11 ;

une probabilité de fonctionnement très élevée.

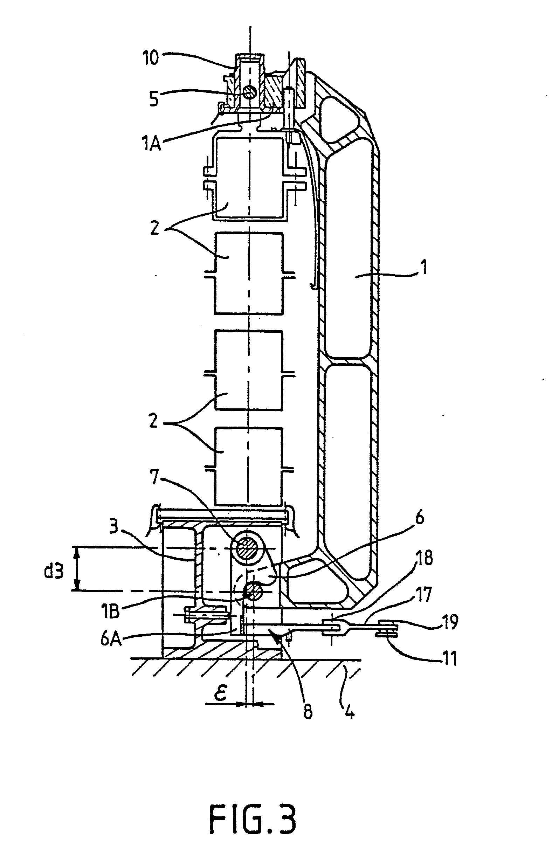

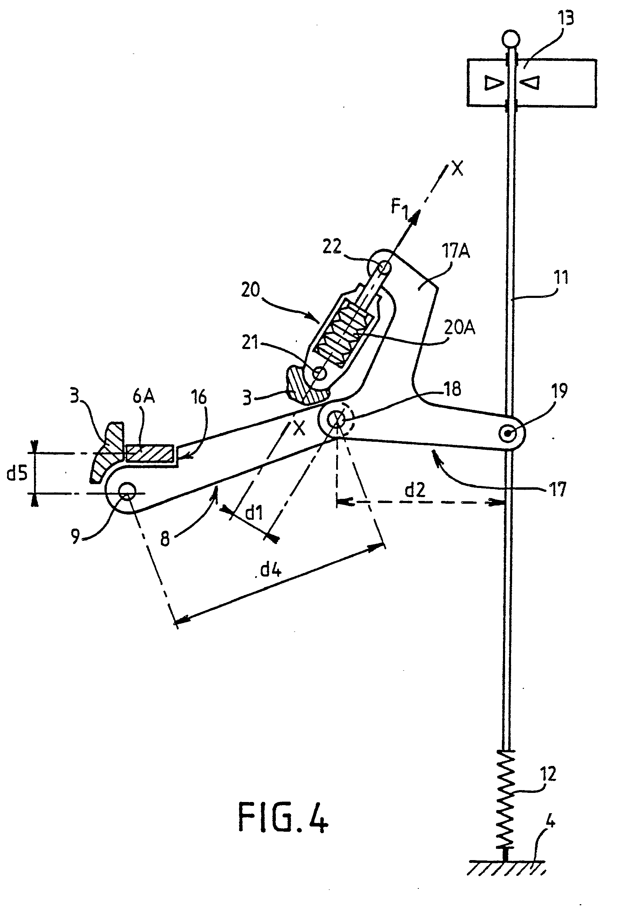

En se reportant plus particulièrement aux figures 3 et 4, on voit que le mécanisme de verrouillage de chaque point de gerbage se caractérise par la combinaison des moyens suivants :

une gâchette 8 articulée en 9 sur le pied 3, qui assure l'immobilisation de l'extrémité libre $6_A$ de la biellette 6 constituant l'élément à verrouiller, par exemple au moyen d'une encoche appropriée 16 ;

un palonnier portant la référence générale 17, articulé en 18, à l'une de ses extrémités, sur l'extrémité libre de la gâchette 8, d'une part, et, d'autre part, lié en 19, à son autre extrémité, au câble de gerbage 11 ;

une biellette élastique désignée par la référence générale 20 qui est articulée, d'une part, en 21 sur le pied 3, d'autre part, en 22 sur le palonnier 17 qui est pourvu à cet effet d'un doigt $17_A$.

L'immobilisation de l'élément $6_A$ est assurée par le câble de gerbage 11 qui, par l'intermédiaire du palonnier 17 et de la biellette élastique 20, maintient la gâchette 8 en position verrouillée et ce, aussi longtemps que le dispositif de sectionnement 13 du câble n'a pas été mis en œuvre.

Il est bien évident que pour obtenir le verrouillage tel que décrit ci-dessus, la biellette élastique 20 doit exercer, dans la position de verrouillage de la figure 4, une force de poussée dans le sens de la flèche $F_1$ sur le doigt $17_A$ du palonnier 17. Cette force produit un moment contraire au moment de maintien qu'exerce le câble 11 sur le palonnier 17.

On a vu précédemment que la présente invention autorisait la multiplication des points de gerbage grâce à une diminution de l'effort de maintien nécessaire à l'immobilisation des gâchettes.

Si l'on se réfère de nouveau à la figure 4, on constate immédiatement que la fonction de démultiplication d'effort est assurée par le rapport des distances entre : d'une part, la distance $d_1$ entre l'axe d'articulation 18 du palonnier 17 et l'axe longitudinal XX' de la biellette élastique 20 et, d'autre part, la distance $d_2$ entre l'axe d'articulation 18 du palonnier 17 et le câble 11.

Il est important de noter que l'on peut réduire considérablement, jusqu'à l'annuler, la tension dans le câble 11, en réduisant la distance $d_1$ entre l'axe d'articulation 18 du palonnier 17 et l'axe XX de la biellette élastique 20.

Toutefois pour des raisons de fiabilité, il est souhaitable, dans la pratique, de conserver à la distance $d_1$ une valeur suffisante pour assurer dans tous les cas l'auto-libération du système sous l'effort du ressort $20_A$ de la biellette élastique 20.

Il apparaît de ce qui précède que le dispositif de verrouillage selon l'invention présente l'avantage de pouvoir réaliser aisément une démultiplication importante entre l'effort de tension de l'étrier 1 et l'effort qu'il y a lieu d'assurer dans le câble 11.

Si l'on se réfère aux figures 3 et 4, on peut en effet dans la pratique, réaliser des rapports de réduction exposés ci-après en ce qui concerne les divers éléments constitutifs :

pour la biellette 6 articulée sur le pied 3 (figure 3) le rapport de réduction $d_3/\varepsilon$ peut être ~ 5 ;

pour la gâchette 8 (figure 4) le rapport de réduction $d_4/d_5$ peut être ~ 5 ;

pour l'ensemble palonnier 17-biellette élastique 20, le rapport de réduction $d_2/d_1$ peut être ~ 10, soit un rapport de réduction global ~ 1/250, ce qui signifie que pour un effort de serrage de l'étrier de 10 000 N on arrive à une tension nominale du câble 11 de 40 N, par point de gerbage.

Le dispositif de verrouillage conforme à l'invention apparaît donc particulièrement avantageux pour assurer le maintien d'appendice nécessitant plusieurs points d'immobilisation, ce qui est le cas des appendices de satellite du genre générateur solaire, réflecteur d'antennes, mâts, etc.

On a vu précédemment que la présente invention garantissait par ailleurs la fonction verrouillage de la gâchette 8 dans la gammme de température exigée par la compensation des effets de la dilatation différentielle.

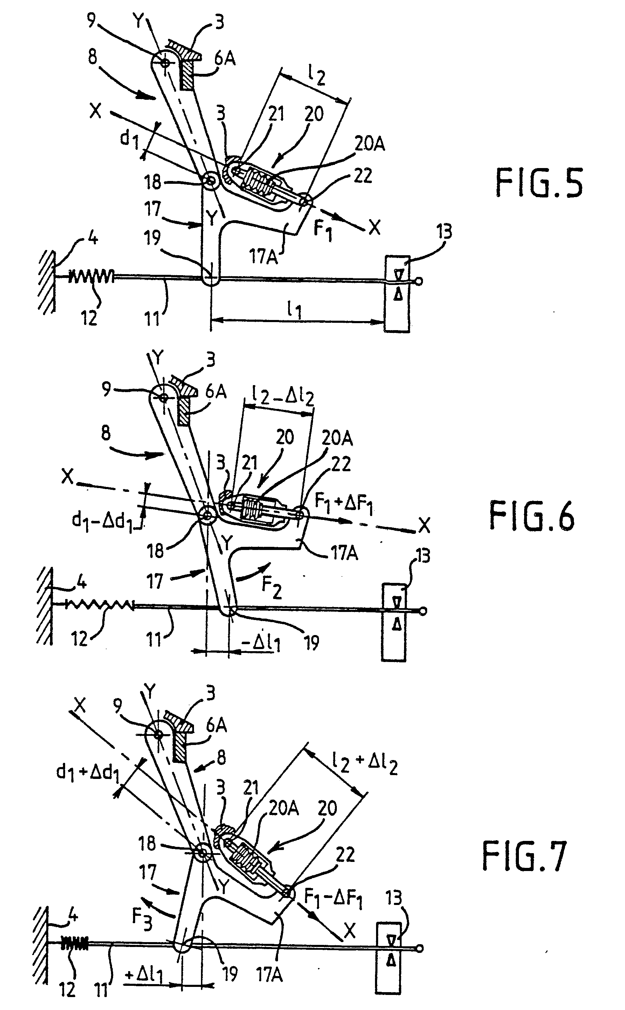

On va décrire maintenant, en se référant aux figures 5, 6 et 7, comment le mécanisme de verrouillage va assurer la compensation des effets de dilatation par rapport à la position verrouillée nominale telle que représentée sur la figure 5, successivement dans le cas de raccourcissement du câble (figure 6) puis dans le cas de l'allongement du câble (figure 7).

Dans la position verrouillée nominale telle que représentée sur la figure 5 et qui correspond à celle que l'on trouve au sol et durant la configuration de lancement du satellite les différents réglages de positionnement et de tension sont déterminés de façon que les éléments constitutifs du mécanisme de verrouillage occupent les positions relatives représentées sur ladite figure 5, à savoir entre autres que la gâchette 8 étant en appui sur la biellette à verrouiller $6_A$, le positionnement de l'articulation 19 du palonnier 17 (déterminé par exemple par la distance $l_1$, entre ladite articulation 19 et le carter du dispositif de sectionnement 13) soit tel que la longueur $l_2$ de la biellette élastique 20, entre ses deux articulations 21 et 22, corresponde à la valeur moyenne de l'effort $F_1$ du ressort $20_A$.

Si l'on passe maintenant au cas du raccourcissement du câble 11 tel que représenté sur la figure 6, on voit que la gâchette 8 restant en appui sur la biellette à verrouiller $6_A$, ledit raccourcissement $l_1 - \Delta l_1$ du câble 11 provoque la rotation du palonnier 17 dans le sens de la flèche $F_2$, ce qui entraîne :

une très faible diminution $l_2 - \Delta l_2$ de la longueur de la biellette élastique 20 ;

une légère augmentation de l'effort de traction $F_1 + \Delta F_1$ de cette biellette par suite de la compression du ressort $20_A$ ;

une diminution du petit bras de levier $d_1$ qui devient $d_1 - \Delta d_1$, d'où une diminution de la tension dans le câble ; et

une augmentation de la force de maintien du mécanisme sur la biellette 6$_A$, due au fait que la force F$_1$ + ΔF$_1$ de la biellette élastique 20 devient plus proche de la perpendiculaire à l'axe longitudinale Y-Y de la gâchette 8.

Si l'on passe ensuite au cas de l'allongement du câble 11 tel que représenté sur la figure 7, on voit que la gâchette 8 restant en appui sur la biellette à verrouiller 6$_A$, ledit allongement l$_1$ + Δl$_1$ du câble 11 provoque la rotation du palonnier 17 dans le sens de la flèche F$_3$, ce qui entraîne :

un très faible allongement l$_2$ + Δl$_2$ de la longueur de la biellette élastique 20 ;

une légère diminution de l'effort de traction F$_1$ − ΔF$_1$ de cette biellette par suite de l'allongement du ressort 20$_A$, lequel effort reste toujours suffisant pour éviter la rotation de la biellette, ceci par la détermination adéquate de la valeur minimum du ressort ;

une augmentation du petit bras de levier d$_1$ qui devient d$_1$ + Δd$_1$, d'où une augmentation de la tension dans câble ; et

une diminution de la force de maintien du mécanisme sur la biellette 6$_A$, due au fait que la force F$_1$ − ΔF$_1$ de la biellette élastique 20 devient plus oblique par rapport à l'axe longitudinal YY de la gâchette 8.

Il ressort de ce qui précède que le dispositif de verrouillage conforme à l'invention apporte une garantie d'assurer un bon verrouillage, et ce même avec des dilatations différentielles importantes entre le corps du véhicule spatial et le câble de gerbage ou navette.

On a vu précédemment comment il était possible de déterminer les différents rapports de réduction concernant les différents éléments constitutifs — biellette 6 articulée sur le pied 3 ; gâchette 8 ; sous-ensemble palonnier 7 — biellette élastique 20, pour obtenir un rapport de réduction important entre l'effort de tension de l'étrier 1 et l'effort dans le câble 11.

Il est possible d'extrapoler ce même dispositif de verrouillage en fonction de conditions thermiques spécifiées, et des cotes des éléments constitutifs, rappelés ci-dessus.

On a vu précédemment l'importance que pouvait prendre le problème apporté par les dilatations différentielles, plus spécialement dans le cas d'un satellite stabilisé selon trois de ses axes.

Là encore, le dispositif de verrouillage conforme à l'invention apparaît particulièrement avantageux dans le cas d'application à l'immobilisation d'appendices de satellite nécessitant plusieurs points d'immobilisation du genre générateur solaire, réflecteur d'antennes, mâts, etc.

On va maintenant décrire, en se référant plus particulièrement aux figures 4, 8 et 9, comment s'opère la libération de l'élément verrouillé, à savoir l'extrémité 6$_A$ de la biellette 6, par le simple sectionnement du câble de gerbage 11 au moyen du dispositif 13.

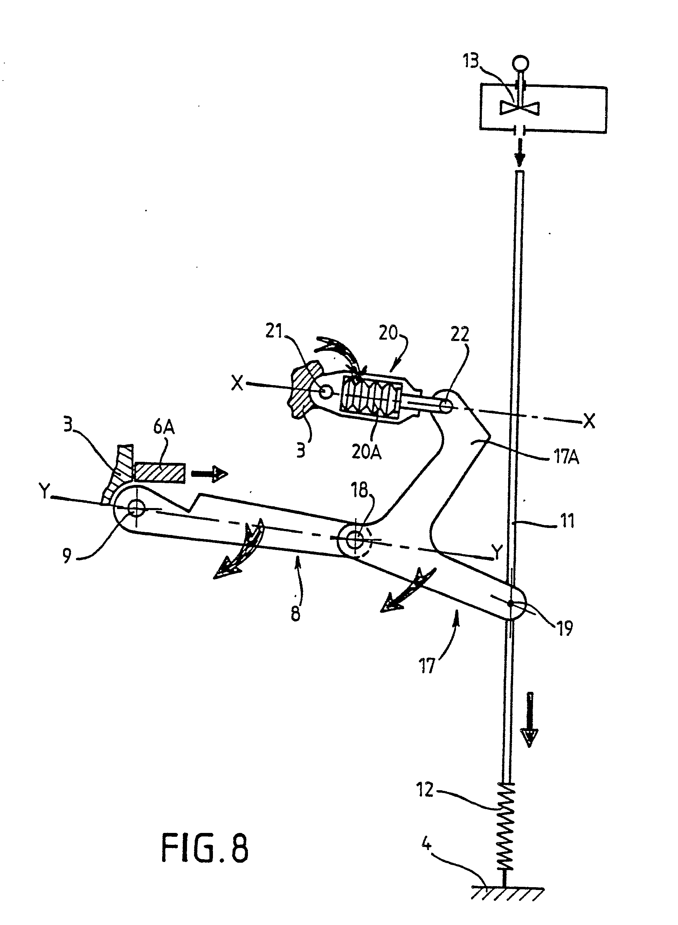

A supposer que le mécanisme de verrouillage se trouve dans la position initiale de la figure 4, on voit que dès l'instant où le dispositif 13 est actionné et sectionne le câble 11, l'action conjuguée du ressort 20$_A$ et du ressort de rappel 12 du câble 11, provoque : la rotation du palonnier 17 autour de son axe d'articulation 18, dans un premier temps ; puis la rotation de la gâchette 8, lorsque la biellette élastique 20 n'assure plus l'effort de maintien, dans un second temps ; et enfin, l'effacement complet de la gâchette 8, assuré par le palonnier 17 et la biellette élastique 20 dont le ressort de mise en tension 20$_A$ est alors en butée interne et dont l'axe longitudinal XX est alors pratiquement parallèle à l'axe longitudinal YY, de la gâchette 8. Ces divers mouvements d'effacement complet de la gâchette 8 sont indiqués par des flèches sur la figure 8.

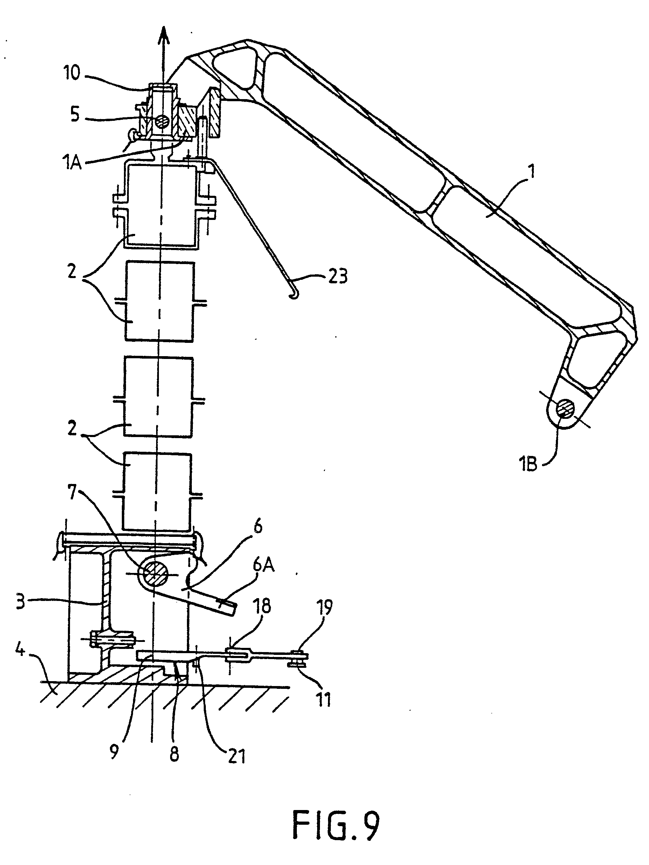

En se référant à la figure 9, on voit immédiatement que dès l'instant où le mécanisme de verrouillage a fonctionné comme on vient de le décrire et provoqué l'effacement complet de la gâchette 8, la biellette 6 se trouve libre de pivoter sous l'action de l'étrier 1 qui agit comme un ressort grâce à la vis de mise en tension 10 et du fait que la biellette 6 est elle-même agencée pour en assurer l'auto-libération grâce à un décalage entre l'axe 7 de ladite biellette et l'axe 1$_B$ de l'étrier 1 venant en appui sur cette biellette, dans la configuration de lancement et comme cela apparaît distinctement sur la figure 3. L'étrier 1 est amené à sa position supérieure sous l'action du ressort de rappel 5$_A$ monté sur l'axe d'articulation 5, étant à noter qu'un ressort supplémentaire 23 est prévu pour maintenir l'étrier 1 en position haute et en assurer la motorisation au cas où le ressort de rappel 5$_A$ ne fonctionnerait pas.

Il est bien évident que l'ensemble des points de gerbage, tels que ceux schématisés sur la figure 2 sont déverrouillés simultanément, et que l'appendice qui était maintenu par les points de gerbage, en l'occurrence le générateur solaire, se trouve libéré et qu'on peut alors procéder à son déploiement.

Il va de soi que la présente invention n'a été décrite et représentée qu'à titre purement explicatif et nullement limitatif et qu'on pourra apporter des équivalences techniques dans ses éléments constitutifs sans pour autant sortir du cadre de ladite invention, lequel est défini dans les revendications annexées.

## Revendications

1. Dispositif de verrouillage multiple permettant d'assurer le verrouillage temporaire des points de gerbage d'un appendice du véhicule spatial au moyen d'un seul câble de gerbage qui est sectionné lorsque l'on veut procéder au déploiement de l'appendice, caractérisé en ce que, pour chaque point de gerbage considéré, il comporte en combinaison :

une gâchette (8) articulée sur le pied (3) du point de gerbage, cette gâchette assurant l'immobilisation temporaire de l'élément à verrouiller (6$_A$) du point de gerbage ;

un palonnier (17) articulé (18), d'une part, sur la gâchette et lié (19), d'autre part, au câble de gerbage (11) ; et

une biellette élastique (20) articulée (21), d'une part, sur le pied (3) du point de gerbage et, d'autre part, (22) sur le palonnier (17) de façon telle que cette biellette élastique (20) exerce sur le palonnier une force (F1) équilibrant la force de maintien qu'exerce sur lui le câble de gerbage (11) ; grâce à quoi l'immobilisation temporaire de l'élément à verrouiller (6A) du point de gerbage est assurée par le câble de gerbage (11) qui, par l'intermédiaire du palonnier (17) et de la biellette élastique (20), maintient la gâchette (8) en position verrouillée, aussi longtemps que le dispositif de sectionnement (13) du câble de gerbage (11) n'est pas mis en œuvre, rendant de ce fait le dispositif insensible aux variations thermiques.

2. Dispositif de verrouillage selon la revendication 1, caractérisé en ce que le palonnier (17) comporte un doigt (17$_A$) sur lequel vient s'articuler (22) la biellette élastique (20), la tension de maintien exercée dans le câble de gerbage (11) étant réduite à la valeur minimum que l'on désire en diminuant l'importance de la distance (d$_1$), entre l'axe d'articulation (18) du palonnier (17) sur la gâchette (8) et l'axe longitudinal (XX) de la biellette élastique (20).

3. Dispositif de verrouillage selon l'une quelconque des revendications 1 ou 2, caractérisé en ce que la biellette élastique (20) comporte un ressort intermédiaire (20$_A$) dont la valeur moyenne de la force nominale (F$_1$) qu'il exerce entre les deux points d'articulation (21, 22) de la biellette est déterminée pour assurer la compensation automatique des effets de la dilatation différentielle par rapport à cette valeur moyenne nominale en ce sens que le raccourcissement du câble de gerbage (11) provoque un raccourcissement (l$_2$ − Δl$_2$) de la biellette (20) et une augmentation compensatoire (F$_1$ + ΔF$_1$) de l'effort exercé par le ressort (20$_A$) tandis que l'allongement du câble de gerbage (11) provoque un allongement (l$_2$ + Δl$_2$) de la biellette (20) et une diminution compensatoire (F$_1$ − ΔF$_1$) de l'effort exercé par le ressort (20$_A$).

**Claims**

1. A multiple locking device to provide temporary locking of the fixation points of a space vehicle appendix by means of a single fixation cable which is severed when it is desired to proceed with displaying of the appendix, characterized in that, for each fixation point considered, it comprises in combination :

a trigger (8) hingedly connected to the foot (3) of the fixation point, such trigger providing temporary immobilization of the fixation point element (6A) to be locked ;

a bar (17) hingedly connected (18) to the trigger, on the one hand, and on the other hand, connected (19) to the fixation cable (11) ; and

an elastic link (20) hingedly connected (21) to the foot (3) of the fixation point, on the one hand, and on the other hand (22), to the bar (17), such that this elastic link (20) exerts upon the bar a force (F$_1$) to balance out the holding force exerted thereupon by the fixation cable (11) ;

whereby temporary immobilization of the element to be locked (6$_A$) of the fixation point is provided by the fixation cable (11) which, through the bar (17) and the elastic link (20), holds the trigger (8) in a locked position as long as the device (13) for severing the fixation cable (11) has not been put into operation, thereby rendering the device insensitive to thermal variations.

2. A locking device according to claim 1, characterized in that the bar (17) comprises a finger (17$_A$) to which the elastic link (20) is hingedly connected (22), the holding tension exerted into the fixation cable (11) being reduced to the desired minimum value by diminishing the value of the distance (d$_1$) between the hinging axis (18) of the bar (17) to the trigger (8) and the longitudinal axis (XX) of the elastic link (20).

3. A locking device according to any one of claims 1 or 2, characterized in that the elastic link (20) comprises an intermediary spring (20$_A$), the average value of the nominal force (F$_1$) of which, exerted between both hinging points (21, 22) of the link, is determined so as to provide automatic compensation for differential dilation effects relative to this nominal average value, in that shortening (l$_2$ − Δl$_2$) of the fixation cable (11) causes shortening of the link (20) and compensating increase (F$_1$ + ΔF$_1$) of the force exerted by the spring (20$_A$), whereas elongation of the fixation cable (11) causes elongation (l$_2$ + Δl$_2$) of the link (20) and compensating reduction (F$_2$ − ΔF$_1$) of the force exerted by the spring (20$_A$).

**Patentansprüche**

1. Mehrfachverriegelungsvorrichtung, die die Sicherstellung der zeitweisen Verriegelung von Stapelstellen eines Anhanges eines Raumfahrzeuges mittels eines einzigen Stapelseiles erlaubt, welches durchgeschnitten wird, wenn die Ausbreitung des Anhanges unternommen wird, dadurch gekennzeichnet, daß bei jeder betrachteten Stapelstelle in Kombination vorgesehen ist :

eine an der Basis (3) der Stapelstelle angelenkte Zuhaltung (8), welche Zuhaltung die zeitweilige Festlegung des Verriegelungselementes (6$_A$) der Stapelstelle sicherstellt ;

ein einerseits an der Zuhaltung angelenkter (18) Steuerhebel (17), der andererseits mit dem Stapelseil (11) verbunden (19) ist ; und

ein elastischer Schwenkarm (20), der einerseits (21) an der Basis (3) der Stapelstelle angelenkt und andererseits (22) an dem Steuerhebel (17) angelenkt ist, derart, daß der elastische Schwenkarm (20) auf den Steuerhebel eine Kraft (F$_1$) ausübt, die mit der Haltekraft im Gleichgewicht steht, die das Stapelseil (11) auf ihn ausübt ;

wodurch die zeitweilige Festlegung des Verriegelungselementes ($6_A$) der Stapelstelle durch das Stapelseil (11) sichergestellt ist, welches durch Vermittlung des Steuerhebels (17) und des elastischen Schwenkarmes (20) die Zuhaltung (8) in Verriegelungsstellung hält, ebenso lange Zeit, wie die Aufschneidevorrichtung (13) für das Stapelseil (11) nicht in Tätigkeit gesetzt wird, und somit die Vorrichtung unempfindlich für thermische Veränderungen macht.

2. Verriegelungsvorrichtung nach Anspruch 1, dadurch gekennzeichnet, daß der Steuerhebel (17) einen Finger ($17_A$) aufweist, an dem der elastische Schwenkarm (20) angelenkt (22) ist, wobei die auf das Stapelseil (11) ausgeübte Haltespannung auf den Minimalwert reduziert wird, was gewünscht ist zum Verringern der Bedeutung des Abstandes ($d_1$) zwischen der Anlenkachse (18) des Steuerhebels (17) an der Zuhaltung (8) und der Längsachse (XX) des elastischen Schwenkarmes (20).

3. Verriegelungsvorrichtung nach einem der Ansprüche 1 oder 2, dadurch gekennzeichnet, daß der elastische Schwenkarm (20) eine Zwischenfeder ($20_A$) aufweist, deren Mittelwert der Nennkraft ($F_1$), die sie zwischen den beiden Anlenkstellen (21, 22) des Schwenkarmes ausübt, bestimmt ist, den automatischen Ausgleich der Auswirkungen der differentiellen Dehnung, bezogen auf ihren Nenn-Mittelwert, in dem Sinne sicherzustellen, daß die verkürzung des Stapelseiles (11) eine Verkürzung ($l_2 - \Delta l_2$) des Schwenkarmes (20) hervorruft, und eine Ausgleichs-Erhöhung ($F_1 + \Delta F_1$) der durch die Feder ($20_A$) ausgeübten Kraft, während die Verlängerung des Stapelseiles (11) eine Verlängerung ($l_1 + \Delta l_2$) des Schwenkarmes (20) und eine ausgleichende Verringerung ($F_1 - \Delta F_1$) der durch die Feder ($20_A$) ausgeübten Kraft hervorruft.

FIG.1

FIG.2

FIG.3

FIG.4

FIG.5

FIG.6

FIG.7

FIG.8

FIG.9